# EUROPÄISCHE PATENTSCHRIFT

(11) **EP 0 464 599 B1**
(45) Veröffentlichungstag und Bekanntmachung des Hinweises auf die Patenterteilung: **28.09.1994**
(21) Anmeldenummer: 91110474.3
(22) Anmeldetag: 25.06.1991
(51) Int. Cl.: F16F 13/00

(54) **Aktives, hydraulisch dämpfendes Motorlager**
Active hydraulically damped engine mount
Support actif à amortissement hydraulique pour moteur

(30) Priorität: 02.07.1990 DE 4021038
(43) Veröffentlichungstag der Anmeldung: 08.01.1992
(73) Patentinhaber: METZELER GIMETALL AG, D-80992 München (DE)
(72) Erfinder: Härtel, Volker, Dr., W-8034 Germering (DE)
(74) Vertreter: Seibert, Hannelore

(56) Entgegenhaltungen:
- EP-A- 0 347 666
- DE-A- 3 419 437
- FR-A- 2 642 493
- PATENT ABSTRACTS OF JAPAN, Band 11, Nr. 255 (M-617)[2702], 19. August 1987;& JP-A-62 62 032 (KAYABA IND. CO.) 18-03-1987
- PATENT ABSTRACTS OF JAPAN, Band 10, Nr. 40 (M-454)[2097], 18. Februar 1986;& JP-A-60 192 141 (TOYODA GOSEI) 30-09-1985
- PATENT ABSTRACTS OF JAPAN, Band 9, Nr. 268 (M-424)[1991], 25. Oktober 1985;& JP-A-60 113 832 (TOUKAI GOMU KOGYO) 20-06-1985

## Beschreibung

Die Erfindung bezieht sich auf ein aktives, hydraulisch dämpfendes Motorlager, insbesondere für Kraftfahrzeuge, mit einer von einer gummielastischen Umfangswand umgebenen Arbeitskammer und einer Ausgleichskammer, die über einen Überströmkanal in einer Zwischenplatte miteinander in Verbindung stehen, sowie mit einer in der Zwischenplatte integrierten Membran, die aus einer piezo-elektrisch in Schwingungen versetzbaren steifen Platte besteht.

Ein derartiges Motorlager ist aus der JP-A-60 192141 bekannt. Dabei ist in dieses hydraulisch dämpfende Motorlager in der Zwischenplatte eine piezo-elektrische Keramikplatte integriert, die ober- und unterseitig von einer mit Durchbrechungen versehenen Platte im Abstand überdeckt ist, so daß die piezo-elektrische Platte von beiden Seiten mit Flüssigkeit beaufschlagt ist. Darüberhinaus weist diese Platte eine zentrale Öffnung auf, die einen Flüssigkeitsaustausch von der einen in die andere Kammer und umgedreht ermöglicht.

Mit einer solchen Anordnung ist es möglich, durch piezo-elektrische Kräfte eine Schwingung dieser Platte entgegen in die obere Flüssigkeitskammer eingeleitete hochfrequente Schwingungen geringer Amplitude zu initiieren, so daß damit derartige Schwingungen isoliert und eine dynamische Verhärtung des eigentlichen Gummitragkörpers verhindert wird. Nachteilig bei dieser Anordnung ist jedoch, daß die piezo-elektrische Platte auf beiden Seiten von Flüssigkeit beaufschlagt ist und daher bei Bewegungen einen größeren Widerstand zu überwinden hat und daß sich diese piezo-elektrische Platte über den gesamten Querschnitt der Zwischenplatte erstreckt, so daß relativ große Kräfte aufgebracht werden müssen, um die Platte in Bewegung zu setzen.

Der vorliegenden Erfindung liegt demgegenüber die Aufgabe zugrunde, eine Membrananordnung zu schaffen, die auch bei hohen Drücken in der Arbeitskammer eine sichere Entkopplung hochfrequenter Schwingungen bewirkt und die darüberhinaus bei einem Ausfall nicht die prinzipielle Funktionstüchtigkeit des Lagers als Dämpfungsglied für niedere Frequenzen in Frage stellt.

Zur Lösung dieser Aufgabe ist erfindungsgemäß vorgesehen, daß in einer zentralen Ausnehmung der Zwischenplatte ein piezo-elektrischer Quarz angeordnet und zur Arbeitskammer hin von der mit dem Quarz gekoppelten Membranplatte abgedeckt ist, die an ihrem Rand über einen elastisch verformbaren Ring mit der Zwischenplatte abdichtend gehaltert und verbunden ist.

Mit einer solchen Anordnung ist es möglich, große statische und niederfreqente Kräfte aufzunehmen, ohne daß dabei die Fähigkeit eingebüßt wird, gleichzeitig dynamische Längenänderungen geringer Amplitude vorzunehmen.

Eine solche Anordnung kann zwar nicht große Volumenänderungen des Systems auffangen; da sie aber grundsätzlich steif und unnachgiebig ist, kann sie gleichzeitig unabhängig von den hohen Druckschwankungen kleinhubige Bewegungen ausführen und damit die den niederfrequenten Schwingungen überlagerten hochfrequenten Druckschwankungen kleiner Amplitude in einem solchen Lager ganz oder teilweise eliminieren.

Die Membranplatte sollte dabei mit dem piezoelektrischen Quarz mechanisch gekoppelt sein.

In einer weiterentwickelten Ausführungsform ist es zweckmäßig, wenn zur Ansteuerung des piezoelektrischen Stellgliedes ein Sensorelement vorgesehen ist, das auf der Karosserieseite des Lagers angeordnet ist und bei Schwingungen oberhalb einer vorgegebenen Mindestfrequenz, die über das Lager übertragen werden, entsprechende Signale an das piezoelektrische Stellglied abgibt.

Dabei kann das Sensorelement aus einem Beschleunlgungsgeber mit piezoelektrischem Material bestehen, dessen Ausgangssignale entsprechend verstärkt derart auf das piezoelektrische Stellglied im Innern des Lagers gegeben sind, daß sich am Sensorelement ein Minimum des Beschleunigungspegels einstellt.

Anhand einer schematischen Zeichnung sind Aufbau und Funktionsweise eines Ausführungsbeispiels nach der Erfindung näher erläutert.

Dabei zeigt das einzige Ausführungsbeispiel einen Längsschnitt durch ein aktives hydraulisch gedämpftes Motorlager mit einem entsprechenden piezoeletrischen Stellglied.

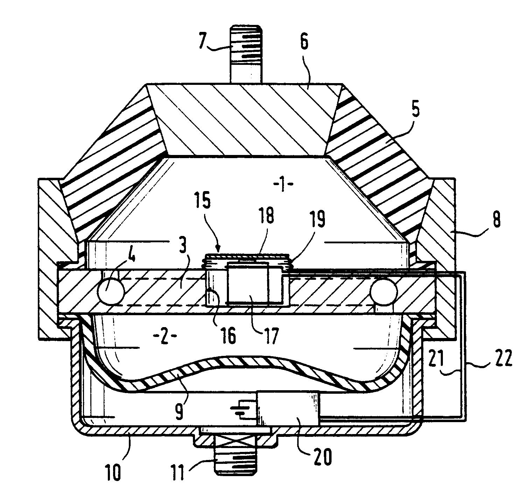

Wie man aus der Zeichnung ersieht, besteht ein solches hydraulisch dämpfendes Zweikammer-Motorlager im wesentlichen aus einer oberen Arbeitskammer 1 und einer unteren Ausgleichskammer 2, die mit einer hydraulischen Flüssigkeit gefüllt und durch eine Zwischenplatte 3 voneinander getrennt sind. In dieser Zwischenplatte 3 befindet sich zunächst die kreisringförmige Überströmöffnung 4, die die beiden Kammern 1 und 2 miteinander verbindet und bei Schwingungen niederer Frequenz und größerer Amplitude eine Dämpfung durch Reibungsverluste der überströmenden Flüssigkeit bewirkt. Die obere Arbeitskammer 1 wird dabei von einer starkwandigen und hohlkegelförmigen Kammerwandung 5 - der sogenannten Tragfeder - aus gummielastischem Material umschlossen, die an der oberen Stirnseite von einer Motorlagerplatte 6 mit einem aufgesetzten Gewindebolzen 7 abgeschlossen und am unteren Außenumfang mit dem ringförmigen Widerlager 8 haftend verbunden ist. Die untere Ausgleichskammer 2 wird von einer beispielsweise tassenförmigen Kammerwandung 9 aus ebenfalls gummielastischem Material gebildet und ist ebenfalls am Widerlager 8 abdichtend befestigt. Zusätzlich kann unterseitig der Kammerwandung 9 noch ein topfförmiges Gehäuse 10 zum Schutz der Ausgleichskammer vorgesehen sein, wobei dieses Gehäuse 10 ebenfalls im Widerlager 8 verspannt ist.

Erfindungsgemäß ist nunmehr angrenzend an die Arbeitskammer 1 zur Veränderung des dynamischen Innendrucks in der Arbeitskammer 1 ein steifes, dynamisches Stellglied 15 vorgesehen, das nach dem dargestellten Ausführungsbeispiel wie folgt aufgebaut ist:
In einer zentralen topfförmigen Ausnehmung 16 der Zwischenplatte 3 ist ein Schwingungserreger 17 aus einem piezokeramischen oder piezoelektro-aktiven Material, beispielsweise einem piezoelektrischen Quarz, angeordnet. Oberseitig ist an den Schwingungserreger 17 eine steife Membranplatte 18 angeschlossen, die an ihrem Rand über einen elastisch verformbaren, membranartigen Ring 19 mit der Zwischenplatte 3 flüssigkeitsdicht verbunden ist. Bei Verwendung von isolierenden Flüssigkeiten, wie z.B. Silikonöl, kann das piezoelektrische Element aber auch direkten Flüssigkeitskontakt haben.

Ein solcher piezoelektrischer Schwingungserreger 17 ist ein in sich steifes Element, das auch bei höheren Drücken in der Arbeitskammer 1 nicht zusammengepreßt werden kann und damit die Lage der Membranplatte 18 allein von der jeweiligen Geometrie des Schwingungserregers 17 bestimmt wird. Bei entsprechender elektrischer Anregung des piezoelektrischen Quarzes 17 wird damit auch die Membranplatte 18 allein den Kontraktionen und Expansionen des Quarzes 17 folgen. Durch die entsprechenden Schwingungen des Quarzes 17 können zwar keine großen Bewegungen der Membranplatte 18 bewirkt werden; da hochfrequente Schwingungen im Lager aber im allgemeinen eine Amplitude von etwa 0,1 mm aufweisen, reichen die bewirkten kleinhubigen Bewegungen der Membranplatte 18, die unabhängig von den hohen Druckschwankungen in der Arbeitskammer 1 erfolgen, auch aus, die den niederfrequenten Druckschwankungen überlagerten hochfrequenten Druckschwankungen kleiner Amplitude in einem solchen Lager ganz oder teilweise zu eliminieren.

Der weitere Vorteil dieses Stellgliedes 15 besteht darin, daß bei einem Versagen der Stromversorgung oder des Regelmechanismus die grundlegende Funktion des Lagers nicht beeinträchtigt ist. Das Stellglied 15 benimmt sich in einem solchen Fall wie eine steife, unnachgiebige Wand, so daß die Funktion eines herkömmlichen, passiven Lagerelementes erhalten bleibt.

In Weiterbildung und zur Optimierung der Funktionsweise eines solchen Stellgliedes 15 ist auf der Karosserieseite des Lagers, beispielsweise auf der Innenseite des Gehäusetopfes 10, ein Sensorelement 20 vorgesehen, das ein entsprechendes, nicht näher dargestelltes Filter aufweist, das beispielsweise nur für Schwingungen im Bereich größer als 50 Hz empfindlich ist, um die Schwingungsübertragung zu messen. Das Ausgangssignal dieses Sensors 20, der beispielsweise als Beschleunigungsgeber basierend auf einem piezoelektrischen Material aufgebaut sein kann, wird dann entsprechend verstärkt und elektronisch aufbereitet und über die Zuleitungen 21 und 22 an dem piezoelektrischen Quarz 17 im Innern des Lagers gegeben. Dabei erfolgt die Rückregelung zweckmäßigerweise so, daß sich am Vibrationssensor 20 ein Minimum des Beschleunigungspegels im betrachteten Frequenzbereich von z.B. 40 bis 300 Hz einstellt, da dann auch akustische Schwingungen vom Motor zur Karosserie optimal isoliert sind.

Selbstverständlich kann auch ein anders aufgebauter Sensor verwendet werden, der auch an anderer Stelle auf der Karossierieseite des Lagers angeordnet sein kann.

Die wesentlichen Vorteile einer solchen Gestaltung und Anordnung liegen in einer einfachen Regelung der zu erzeugenden Schwingungen, in der Funktion eines steifen und unnachgiebigen Stellgliedes, das unempfindlich gegen große Druckschwankungen ist, sowie in einem "gutmütigen" Verhalten im Falle des Versagens des Stellgliedes, da das Lager dann als normales passives Hydrolager in Funktion bleibt.

## Patentansprüche

1. Aktives, hydraulisch dämpfendes Motorlager, insbesondere für Kraftfahrzeuge, mit einer von einer gummielastischen Umfangswand (5) umgebenen Arbeitskammer (1) und einer Ausgleichskammer (2), die über einen Überströmkanal (4) in einer Zwischenplatte (3) miteinander in Verbindung stehen, sowie mit einer in der Zwischenplatte (3) integrierten Membran (18), die aus einer piezo-elektrisch in Schwingungen versetzbaren steifen Platte (18) besteht, dadurch gekennzeichnet, daß in einer zentralen Ausnehmung (16) der Zwischenplatte (23) ein piezo-elektrischer Quarz (17) angeordnet und zur Arbeitskammer (1) hin von der mit dem Quarz (17) gekoppelten Membranplatte (18) abgedeckt ist, die an ihrem Rand über einen elastisch verformbaren Ring (19) mit der Zwischenplatte (3) abdichtend gehaltert und verbunden ist.

2. Aktives Motorlager nach Anspruch 1, dadurch gekennzeichnet, daß die Membranplatte (18) mit dem piezoelektrischen Quarz (17) mechanisch gekoppelt ist.

3. Aktives Motorlager nach einem der Ansprüche 1 oder 2, dadurch gekennzeichnet, daß zur Ansteuerung des piezoelektrischen Stellgliedes (15) ein Sensorelement (20) vorgesehen ist, das auf der Karosserieseite (10) des Lagers angeordnet ist und bei Schwingungen, die oberhalb einer vorgegebenen Mindestfrequenz über das Lager übertragen werden, entsprechende Signale an das piezoelektrische Stellglied (15) abgibt.

4. Aktives Motorlager nach Anspruch 3, dadurch gekennzeichnet, daß das Sensorelement (20) aus einem Beschleunigungsgeber mit piezoelektrischem Material besteht, dessen Ausgangssignale entsprechend verstärkt derart auf das piezoelektrische Stellglied (15) im Innern des Lagers gegeben sind, daß sich am Sensorelement (20) ein Minimum des Beschleunigungspegels einstellt.

## Claims

1. Active, hydraulically damping engine mounting, in particular for motor vehicles, having a working chamber (1) surrounded by a rubber-elastic peripheral wall (5) and a compensation chamber (2), said chambers communicating with one another via an overflow channel (4) in an intermediate plate (3), as well as having a diaphragm (18) integrated in the intermediate plate (3), said diaphragm comprising a rigid plate (18) which may be piezoelectrically set in vibration, characterized in that a piezoelectric quartz (17) is disposed in a central recess (16) of the intermediate plate (23) and is screened off from the working chamber (1) by the diaphragm plate (18), which is coupled to the quartz (17) and whose edge is sealingly supported on and connected to the intermediate plate (3) by means of an elastically deformable ring (19).

2. Active engine mounting according to claim 1, characterized in that the diaphragm plate (18) is mechanically coupled to the piezoelectric quartz (17).

3. Active engine mounting according to one of claims 1 or 2, characterized in that, for activating the piezoelectric actuator (15), a sensor element (20) is provided, which is disposed at the body end (10) of the mounting and, upon vibrations above a predetermined minimum frequency being transmitted via the mounting, supplies corresponding signals to the piezoelectric actuator (15).

4. Active engine mounting according to claim 3, characterized in that the sensor element (20) comprises an acceleration pickup with piezoelectric material, whose output signals are supplied, correspondingly amplified, to the piezoelectric actuator (15) inside the mounting in such a way that a minimum of the acceleration level arises at the sensor element (20).

## Revendications

1. Support actif à amortissement hydraulique pour moteur, notamment pour véhicules automobiles, comportant une chambre de travail (1) entourée d'une paroi (5) de pourtour présentant l'élasticité du caoutchouc et une chambre de compensation (2), ces chambres communiquant entre elles par un canal de passage (4) ménagé dans une plaque intermédiaire (3), ainsi qu'une membrane (18) qui est intégrée dans la plaque intermédiaire (3) et est constituée d'une plaque rigide (18) pouvant être mise en vibrations par effet piézoélectrique, caractérisé par le fait qu'un quartz piézoélectrique (17) est disposé dans un évidement central (16) de la plaque intermédiaire (23) et est recouvert, en direction de la chambre de travail (1), par la plaque (18) à membrane couplée au quartz (17) et reliée et maintenue, de façon étanche, par son bord, à la plaque intermédiaire (3) au moyen d'un anneau (19) déformable élastiquement.

2. Support actif pour moteur suivant la revendication 1, caractérisé par le fait que la plaque (18) à membrane est couplée mécaniquement au quartz piézoélectrique (17).

3. Support actif pour moteur suivant l'une des revendications 1 ou 2, caractérisé par le fait que pour la commande de l'organe de réglage piézoélectrique (15) il est prévu un élément formant capteur (20), qui est monté du côté (10) du support, tourné vers la carrosserie, et qui, pour des vibrations qui sont transmises, au-dessus d'une fréquence minimale donnée par l'intermédiaire du support, envoie des signaux correspondants à l'organe de réglage (15) piézoélectrique.

4. Support actif pour moteur suivant la revendication 3, caractérisé par le fait que l'élément formant capteur (20) est constitué d'un capteur d'accélération en un matériau piézoélectrique dont les signaux de sortie sont envoyés, en étant amplifiés comme il convient, à l'organe de réglage (15) piézoélectrique à l'intérieur du support de manière à établir un minimum du niveau d'accélération dans l'élément formant capteur (20).
